# EUROPÄISCHE PATENTSCHRIFT

(11) **EP 1 861 637 B1**
(45) Veröffentlichungstag und Bekanntmachung des Hinweises auf die Patenterteilung: **16.12.2009**
(21) Anmeldenummer: 06707468.2
(22) Anmeldetag: 08.03.2006
(51) Int. Cl.: F16H 61/00, F16H 57/04

(54) **VERFAHREN UND VORRICHTUNG ZUR STEUERUNG EINER ÖLVERSORGUNG FÜR EIN AUTOMATGETRIEBE UND EIN ANFAHRELEMENT**
METHOD AND DEVICE FOR CONTROLLING THE OIL SUPPLY OF AN AUTOMATIC GEARBOX AND A STARTING ELEMENT
PROCEDE ET DISPOSITIF POUR COMMANDER UNE ALIMENTATION EN HUILE POUR UNE BOITE DE VITESSE AUTOMATIQUE ET ELEMENT DE DEMARRAGE

(30) Priorität: 22.03.2005 DE 102005013137
(43) Veröffentlichungstag der Anmeldung: 05.12.2007
(73) Patentinhaber: ZF Friedrichshafen AG, 88038 Friedrichshafen (DE)
(72) Erfinder: REISCH, Matthias, 88214 Ravensburg (DE); DREIBHOLZ, Ralf, 88074 Meckenbeuren (DE); GUMPOLTSBERGER, Gerhard, 88045 Friedrichshafen (DE)
(86) Internationale Anmeldenummer: PCT/EP2006/002106
(87) Internationale Veröffentlichungsnummer: WO 2006/099947

(56) Entgegenhaltungen:
- EP-A- 1 223 365
- EP-A- 1 260 739
- EP-A- 1 420 185
- DE-A1- 10 160 884
- DE-A1- 10 327 406
- US-A1- 2005 064 975
- US-B1- 6 350 108
- PATENT ABSTRACTS OF JAPAN Bd. 2000, Nr. 05, 14. September 2000 (2000-09-14) -& JP 2000 046166 A (TOYOTA MOTOR CORP), 18. Februar 2000 (2000-02-18)
- PATENT ABSTRACTS OF JAPAN Bd. 2002, Nr. 11, 6. November 2002 (2002-11-06) -& JP 2002 195399 A (JATCO LTD), 10. Juli 2002 (2002-07-10)
- PATENT ABSTRACTS OF JAPAN Bd. 2000, Nr. 20, 10. Juli 2001 (2001-07-10) -& JP 2001 074130 A (JATCO TRANSTECHNOLOGY LTD), 23. März 2001 (2001-03-23) in der Anmeldung erwähnt

## Beschreibung

Die Erfindung betrifft ein Verfahren und eine Vorrichtung zur Steuerung einer Ölversorgung für ein Automatgetriebe und ein Anfahrelement gemäß dem Oberbegriff der unabhängigen Patentansprüche 1 und 4.

Automatgetriebe sind Getriebe, welche insbesondere in Kraftfahrzeugen seit geraumer Zeit genutzt werden, um eine von einem Fahrzeugantriebsmotor bzw. Fahrmotor bereitgestellte Eingangsdrehzahl in eine zum Antrieb der Räder genutzte Ausgangsdrehzahl zu übersetzen, wobei der Fahrer von der Aufgabe der Wahl eines geeigneten Übersetzungsverhältnisses zumindest weitgehend entlastet wird.

Die Übersetzungsverhältnisse dieser Automatgetriebe können stufenlos variabel sein oder einzelne Getriebeübersetzungen mit festgelegtem Übersetzungsverhältnis aufweisen. Sie werden in der Mehrzahl mittels hydraulischer Schaltelemente geschaltet, weshalb für den Betrieb eine nach Volumenstrom und Druck ausreichende Ölversorgung notwendig ist. Hierzu dient meist eine mechanisch durch den Antriebsmotor des Fahrzeugs angetriebene Ölpumpe.

Bei modernen Antriebskonzepten ist zur Minimierung des Kraftstoffverbrauchs und der Schadstoffemissionen oft eine Schaltung vorgesehen, die bei Vorliegen bestimmter Bedingungen automatisch den Fahrzeugantriebsmotor abschaltet. Dies kann beispielsweise beim sogenannten Segelbetrieb während des Ausrollens des Fahrzeugs sowie bei Stillstand des Fahrzeugs der Fall sein und ist unter dem Begriff Start-Stop-Funktionalität bekannt. Wenn ermittelt wird, dass der Fahrer die Fahrt fortsetzen will bzw. dass er mittels einer Fahrpedalbetätigung wieder ein Antriebsmoment vom Fahrzeugantriebsmotor abfordert, dann wird der Fahrzeugantriebsmotor ohne weitere Bedienschritte des Fahrers erneut gestartet, im Automatgetriebe ein entsprechender Fahrgang eingelegt oder beibehalten und eine Fahrkupplung geschlossen.

Da eine vom Fahrzeugantriebsmotor mechanisch angetriebene Ölpumpe bei Stillstand des Motors ebenfalls keine Leistung bereitstellt, ist es bekannt, eine elektrisch angetriebene Zusatzölpumpe vorzusehen, welche bei Stillstand des Fahrzeugantriebsmotors entweder die Hydraulikversorgung durchgehend aufrecht erhält, oder zumindest im Bedarfsfall einen entsprechenden Ölstrom bei benötigtem Druck zur Verfügung stellt, um ein hydraulisches Schalten des Automatgetriebes und gegebenenfalls die Versorgung weiterer Aggregate oder Komponenten zu ermöglichen.

So ist aus der DE 101 62 973 A1 eine Vorrichtung zur Steuerung des Antriebs einer Ölversorgung bekannt, welche neben einer mechanischen Ölpumpe eine elektrische Ölpumpe aufweist. Beide Ölpumpen dienen der Versorgung einer hydraulischen Steuereinheit zur Ansteuerung eines Automatikgetriebes und einer zwischen Antriebsmotor und Getriebe befindlichen Kupplung. Um auch bei einer Abschaltung des Antriebsmotors einen ausreichenden Hydraulikdruck und entsprechenden Ölmassenstrom zum Schalten des Automatikgetriebes und der Kupplung zur Verfügung zu haben, wird bei Unterschreitung eines Drehzahlgrenzwertes des Antriebsmotors bzw. des damit zusammenhängenden hydraulischen Druckes der mechanischen Ölpumpe aufgrund bestimmter Kriterien die elektrische Ölpumpe aktiviert. Nachdem der Antriebsmotor erneut in Betrieb genommen wurde und seine Drehzahl oberhalb einer zweiten Drehzahlschwelle liegt, wird die elektrische Ölpumpe wieder abgeschaltet.

Ähnliche Vorrichtungen sind aus der US 5 474 428 A, der US 6 390 947 B1 und der EP 1 223 365 A2 bekannt, wobei jeweils eine elektrische Ölpumpe in Verbindung mit einer Start-Stop-Funktionalität dazu dient, bei abgeschaltetem Antriebsmotor die Aufrechterhaltung bzw. den schnellen Aufbau eines zum Schalten des Getriebes ausreichenden Hydraulikdruckes sicherzustellen.

Des weiteren ist aus der US 6 350 108 B1, die alle Merkmale des Oberbegriffs des Anspruchs 1 offenbart, eine Ölpumpvorrichtung für ein Kraftfahrzeuggetriebe bekannt mit einer von einem Fahrzeugmotor mechanisch angetriebenen Ölpumpe und einer elektrisch angetriebenen Ölpumpe, welche mit einer Ventileinheit verbunden sind, die sowohl Kupplungen, als auch einen Wandler und eine Schmierung des Getriebes mit Öl versorgt. Die Grundversorgung der Schmierung und des Wandlers erfolgt dabei über die mechanisch angetriebene Ölpumpe, welche einen niedrigen Öldruck erzeugt und die Grundversorgung der Kupplungen erfolgt über die elektrisch angetriebene Ölpumpe, welche einen hohen Öldruck erzeugt, wobei die mechanisch angetriebene Ölpumpe bei hohen Motordrehzahlen die elektrisch angetriebene Ölpumpe unterstützen kann und die elektrisch angetriebene Pumpe bei niedrigen Motordrehzahlen die mechanisch angetriebene Ölpumpe unterstützen kann.

Bei mechanisch vom Antriebsmotor getriebenen Ölpumpen ist die Pumpleistung aufgrund der üblichen starren Koppelung an die Drehzahl des Fahrzeugantriebsmotors zumeist annähernd proportional zu dessen Drehzahl. Dagegen ist der zur Schaltung des Automatgetriebes und einer Fahrkupplung benötigte Druck bzw. Volumenstrom annähernd konstant und steigt auch bei einer üblichen Schmierölversorgung des Getriebes mittels derselben Pumpe mit steigender Drehzahl bzw. Fahrgeschwindigkeit nur leicht an. Da die mechanisch angetriebene Ölpumpe während des normalen Fahrbetriebs zumeist alleine betrieben und eine elektrische Ölpumpe allenfalls bei besonders niedrigen Drehzahlen des Antriebsmotors zugeschaltet wird, muss die mechanische Ölpumpe so ausgelegt sein, dass sie schon bei geringen Drehzahlen des Antriebsmotors eine ausreichende Pumpleistung liefert. Bei höheren Drehzahlen hat dies eine unnötig hohe Förderleistung und einen entsprechenden Energieverlust zur Folge.

Die Ankopplung des Fahrzeugantriebsmotors an ein Automatgetriebe erfolgt in der Regel über ein auch allgemein als Anfahrelement bezeichnetes Kupplungselement, insbesondere eine Reibkupplung. Dabei können vorteilhaft sogenannte nasse, also ölgekühlte Anfahrelemente verwendet werden. Zur Abgrenzung von im Automatgetriebe vorgesehenen Kupplungen, beispielsweise zur Synchronisation von Getriebebauteilen, wird für diese Anfahrelemente im Folgenden der Begriff Fahrkupplung verwendet. Es ist dabei unerheblich, ob die Fahrkupplung vom Getriebe baulich getrennt ist. Entscheidend ist deren Funktion, das Drehmoment des Antriebsmotors zum Getriebe schaltbar zu übertragen, wobei neben den Grundstellungen "Ausgekuppelt" und "Voll Eingekuppelt" auch eine Zwischenstellung mit Kupplungsschlupf vorhanden ist.

Während bei Schaltvorgängen des Getriebes während der Fahrt zumeist nur relativ geringe Belastungen an der Fahrkupplung auftreten, arbeitet die Kupplung bei Anfahrvorgängen zumindest bei Automatgetrieben mit festen Übersetzungsstufen regelmäßig so lange mit Schlupf, bis die Fahrgeschwindigkeit des Fahrzeugs, die gewählte Übersetzungsstufe und die Drehzahl des Fahrzeugantriebsmotors ein vollständiges Einkuppeln ermöglichen. Daher ist gerade bei Anfahrvorgängen der Bedarf an Kühlflüssigkeit für die Fahrkupplung besonders groß.

Eine Erhöhung der Antriebsmotordrehzahl zur Anhebung der Pumpleistung einer durch den Fahrzeugantriebsmotor mechanisch angetriebenen Ölpumpe ist hier nicht zielführend, da proportional mit der Antriebsmotordrehzahl auch die Verlustleistung der Fahrkupplung und damit auch der Bedarf an Kühlöl steigt.

Eine für den Anfahrbetrieb ausreichende Auslegung dieser Ölpumpe hat zur Folge, dass bei höheren Drehzahlen des Fahrzeugantriebsmotors eine unnötig hohe Pumpleistung zur Verfügung steht und dementsprechend große energetische Verluste entstehen, die sich in einem erhöhten Kraftstoffverbrauch und erhöhten Emissionswerten niederschlagen.

Es ist zwar grundsätzlich denkbar, die Drehgeschwindigkeit des Antriebsmotors und der mechanisch angetriebenen Ölpumpe zum Beispiel über ein einstellbares Getriebe zu entkoppeln oder die Pumpleistung der Ölpumpe beispielsweise durch Pumpen mit einstellbarem Fördervolumen bei Bedarf zu verringern und so die Energieverluste zu senken, diese Lösungen sind jedoch mechanisch recht aufwändig und damit teuer sowie tendenziell fehleranfällig.

Aus der JP 2001 074 130 A ist ein hydraulisch schaltbares Getriebe mit einer elektrisch angetriebenen Ölpumpe zur Versorgung einer hydraulischen Steuereinheit bekannt. Eine mechanisch angetriebene Ölpumpe fördert einen Kühlölstrom. Zwischen beiden aus demselben Reservoir gespeisten Ölkreisen ist eine Bypassleitung vorgesehen, die bei Ausfall der elektrischen Ölpumpe eine Versorgung der hydraulischen Steuereinheit durch die mechanisch angetriebene Ölpumpe sicherstellen soll. Dabei verhindert ein Rückschlagventil eine Förderung des Ölstroms der elektrischen Ölpumpe in den zur Kühlung vorgesehenen Ölkreis.

Auch bei dieser technischen Lösung muss die mechanische Ölpumpe daher auf die bei den Anfahrbedingungen maximal erforderliche Pumpleistung ausgelegt sein. Zudem verursacht der durchgehende Betrieb der elektrischen Ölpumpe zur Versorgung der hydraulischen Steuereinheit erhebliche Energieverluste bei der Umwandlung von mechanischer in elektrische Energie und zurück in mechanische Energie.

Vor diesem Hintergrund liegt der Erfindung die Aufgabe zugrunde, ein Verfahren und eine Vorrichtung zur Steuerung einer Ölversorgung für ein Automatgetriebe und eine Fahrkupplung vorzustellen, welche mit Hilfe einer mechanisch von einem Fahrzeugantriebsmotor angetriebenen Ölpumpe und einer zweiten, elektrisch angetriebenen Ölpumpe sowohl bei Betrieb des Fahrzeugantriebsmotors als auch bei dessen Stillstand eine ausreichende Ölversorgung einer hydraulischen Steuereinrichtung des Automatgetriebes und/oder der Fahrkupplung sicherstellen kann. Zudem soll eine notwendige Kühlölversorgung einer Fahrkupplung dadurch gewährleistet sein, dass zumindest im Anfahrbetrieb die elektrisch angetriebene Ölpumpe einen Ölstrom zur Kühlung der Fahrkupplung bereitstellt.

Die Lösung dieser Aufgabe ergibt sich aus den Merkmalen der unabhängigen Patentansprüche, während vorteilhafte Ausgestaltungen und Weiterbildungen der Erfindung den Unteransprüchen entnehmbar sind.

Der Erfindung liegt die Erkenntnis zugrunde, dass eine mechanisch von einem Fahrmotor angetriebene Ölpumpe für die Deckung des erhöhten Kühlölbedarfs im Anfahrbetrieb alleine schlecht geeignet ist, da eine Erhöhung der Förderleistung durch eine Anhebung der Drehzahl des Fahrmotors hier nicht zielführend ist, und andererseits eine Auslegung der Ölpumpe auf diesen erhöhten Kühlölbedarf bei niedrigen Drehzahlen zu einer erheblichen Überdimensionierung der Ölpumpe für den normalen Fahrbetrieb und damit zu erheblichen Energieverlusten führt. Die Erfindung geht weiter davon aus, dass eine bedartsgesteuerte Ergänzung der Förderleistung der mechanisch von einem Fahrmotor angetriebenen Ölpumpe durch eine elektrisch angetriebene Ölpumpe eine kleinere Dimensionierung der mechanisch angetriebenen Ölpumpe erlaubt, wodurch sich Kostenvorteilen bei der Beschaffung der mechanisch angetriebenen Ölpumpe erzielen und erhebliche Energieverluste im Fahrbetrieb vermeiden lassen.

Demnach geht die Erfindung aus von einem Verfahren zur Steuerung einer Ölversorgung für ein Automatgetriebe und ein Anfahrelement, in einem Fahrzeug, mit der Vorrichtung nach Anspruch 1, bei der mindestens zwei Ölpumpen zur Versorgung zumindest einer hydraulischen Steuereinrichtung des Automatgetriebes und/oder des Anfahrelementes in einem Hochdruckzweig bzw. in einem Niederdruckzweig vorhanden sind, bei der eine erste dieser Ölpumpen eine mechanisch von einem Fahrmotor antreibbare Ölpumpe und eine zweite dieser Ölpumpen eine elektrisch antreibbare Ölpumpe ist, und letztere zumindest bei Stillstand des Fahrmotors und Vorliegen weiterer Betriebsbedingungen eine Ölpumpleistung zur Versorgung der hydraulischen Steuereinrichtung bereitstellt, und bei der das Anfahrelement flüssigkeitsgekühlt ist.

Wie bereits erwähnt wurde, ist das flüssigkeitsgekühlte Anfahrelement dabei zumeist eine ölgekühlte Reibkupplung, welche antriebsbezogen zwischen Fahrmotor und Getriebe angeordnet ist, baulich aber durchaus zum Beispiel in das Getriebe integriert sein kann. Der Fahrmotor ist im Falle von Kraftfahrzeugen üblicherweise eine Brennkraftmaschine. Der Antrieb des Kraftfahrzeuges kann jedoch auch als Hybridantrieb mit einem Elektromotor und einer Brennkraftmaschine als Fahrmotoren ausgebildet sein. Die weiteren Betriebsbedingungen für den Betrieb der elektrisch angetriebenen Ölpumpe können im einfachsten Fall in der Bereitstellung einer ausreichenden elektrischen Leistung bestehen, sich jedoch beispielsweise auch auf die Öltemperatur oder andere Parameter beziehen.

Zur Lösung der gestellten Aufgabe hinsichtlich des Verfahrens ist gemäß der Erfindung nun zusätzlich vorgesehen, dass die elektrisch angetriebene Ölpumpe zumindest im Anfahrbetrieb einen Ölstrom zur Kühlung des Anfahrelementes bereitstellt.

Durch diese überraschend einfache Maßnahme kann gerade in dem Betriebsbereich, in dem ein stark erhöhter Ölstrom zur Kühlung der Anfahrkupplung erforderlich ist, die von der mechanisch vom Fahrmotor angetriebenen Ölpumpe aufzubringende Pumpleistung verringert werden. Hierdurch ist es möglich, letztere Ölpumpe insgesamt erheblich kleiner auszulegen, welches neben einer Gewichts- und Kostenersparnis vor allem zu einer erheblich geringeren Verlustleistung an dieser Pumpe bei höheren Drehzahlen des Fahrmotors führt. Somit lässt sich der Kraftstoffbedarf eines Kraftfahrzeugs und dessen Schadstoffemissionen reduzieren.

Zusätzlich führt die Verringerung der Verlustleistung der mechanisch angetriebenen Pumpe, die ansonsten weitestgehend in Wärme umgesetzt würde, zu einer erwünschten Verringerung der Wärmeeinbringung in das Öl. Dies führt zu weiteren positiven Effekten, wie beispielsweise zu der Möglichkeit, einen kleineren Öl-Wärmetauscher vorzusehen oder ganz auf diesen zu verzichten.

In einer ersten Weiterführung des erfindungsgemäßen Verfahrens stellt die mechanisch vom Fahrmotor angetriebene Ölpumpe während eines normalen Fahrbetriebszustands, also nach einem abgeschlossenen Anfahrvorgang, zumindest den überwiegenden Teil des zur Nachkühlung des Anfahrelementes verwendeten Ölstromes bereit. Unter einem normalen Fahrbetriebszustand wird hier die Fahrt bei laufendem Antriebsmotor, geschlossener Fahrkupplung und eingelegtem Gang bei einer deutlich über der Leerlaufdrehzahl liegenden Drehzahl des Fahrmotors verstanden.

Dies hat zur Folge, dass für die überwiegende Zeit des Betriebs des Fahrzeugs die elektrisch angetriebene Ölpumpe mit verminderter Leistung betreiben und gemäß einer zweiten Weiterführung des Verfahrens bevorzugt ganz abgestellt werden kann.

Letzteres ermöglicht nicht nur eine Auslegung der elektrisch angetriebenen Ölpumpe auf eine geringere Gesamtlebensdauer, sondern hat auch energetische Vorteile, da die verlustträchtige Umwandlung von mechanischer Energie in elektrische und zurück in mechanische Energie minimiert werden kann. Zudem wird das elektrische Bordnetz und gegebenenfalls die Fahrzeugbatterie und/oder der Generator des Fahrzeugs weniger stark belastet.

Es bleibt Aufgabe der Entwickler, im konkreten Anwendungsfall ein gewünschtes Optimum zwischen einem-möglichst geringen Betriebsanteil der elektrisch angetriebenen Ölpumpe und einer möglichst geringen Pumpleistung der mechanisch angetriebenen Ölpumpe festzulegen. Praktikabel scheint hier bei einer gegebenen oder angenommenen Viskosität und Temperatur des Öls die Auslegung der mechanisch angetriebenen Ölpumpe in der Art, dass diese ab einer bestimmten Grenzdrehzahl des Antriebsmotors die benötigte Pumpleistung alleine zur Verfügung stellen kann. Eine sinnvolle Grenzdrehzahl des Fahrmotors könnte beispielsweise zwischen 1200 und 2500 Umdrehungen pro Minute liegen.

Grundsätzlich ist es möglich, die Pumpleistung der elektrisch angetriebenen Ölpumpe im Sinne einer Backup-Reserve bei einem teilweisen oder vollständigen Ausfall der mechanisch angetriebenen Ölpumpe vorzusehen und so die Ausfallsicherheit der Ölversorgung durch Redundanz zu verbessern. Beim Ausfall der elektrisch angetriebenen Ölpumpe kann dann die mechanisch angetriebene Ölpumpe den benötigten Ölstrom in allen Betriebssituationen alleine zur Verfügung stellen.

Für Fahrzeuge mit einem normalen Anspruch an die Ausfallsicherheit der Ölversorgung wird es jedoch bevorzugt, wenn die mechanisch vom Fahrmotor angetriebene Ölpumpe derart ausgelegt ist, dass diese alleine keinen für den Anfahrbetrieb ausreichenden Ölstrom zur Kühlung des Anfahrelementes bereit stellten kann, da auf diese Weise die Baugröße und Verlustleistung dieser Ölpumpe im normalen Fahrbetrieb gering gehalten werden kann.

Da die elektrisch angetriebene Ölpumpe nur bedarfsweise betrieben wird und zudem in ihrer Pumpleistung mit einfachsten Mitteln einstellbar ist, kann diese vorzugsweise so ausgelegt sein, dass sie alleine einen zur Versorgung einer hydraulischen Steuereinrichtung des Automatgetriebes und/oder des Anfahrelementes sowie zur Kühlung des Anfahrelementes ausreichenden Ölstrom bereit stellten kann.

Auf diese Weise wird für die Pumpen der Ölversorgung eine Redundanz bei nur geringen zusätzlichen Verlustleistungen und Bauteilkosten erreicht. Natürlich ist es im Zuge einer Minimierung der Bauteilekosten und der Verlustleistung auch denkbar, auf diese Redundanz zu verzichten und die Pumpleistung der elektrisch angetriebenen Ölpumpe so zu wählen, dass bei maximalem Pumpleistungsbedarf die mechanisch angetriebene und die elektrisch angetriebene Ölpumpe zusammen gerade die benötigte Pumpleistung bei gegebener Drehzahl des Antriebsmotors bereitstellen können. In diesem Fall kann eine Erhöhung der Betriebssicherheit insbesondere durch die in den Ansprüchen 8 bis 12 genannten Weiterbildungen des erfindungsgemäßen Verfahrens erreicht werden, die weiter unten im einzelnen beschrieben werden.

Die Pumpleistung einer Ölpumpe setzt sich bekanntermaßen aus der pro Zeiteinheit geförderten Ölmenge und dem dabei erreichten Druck des geförderten Öls bzw. aus dessen Druckdifferenz zwischen Ansaugleitung und Ausstoßleitung der Pumpe zusammen. Während für den Betrieb der hydraulischen Steuerungseinheit zur Ansteuerung des Automatgetriebes und/oder der Fahrkupplung oft relativ hohe Öldrücke aber nur geringe Durchflussmengen benötigt werden, verhält es sich bei dem zur Kühlung der Fahrkupplung verwendeten Ölstroms und beispielsweise auch beim durch einen Ölkühler geleiteten Ölstrom genau andersherum.

Eine Senkung des Öldrucks für diese Zwecke durch einen einfachen Druckminderer führt hier zu großen Energieverlusten und einer unerwünschten Erwärmung des Öls. Zudem müssen die Ölpumpen in diesem Fall so ausgelegt sein, dass sie den gesamten benötigten Ölstrom unter dem für die hydraulische Steuereinrichtung benötigtem hohem Druck fördern können.

In einer Weiterbildung des Verfahrens soll die elektrisch angetriebene Ölpumpe und/oder die mechanisch angetriebene Ölpumpe so mit einem Umwandlungsmittel zusammenwirken, dass aus einer von der elektrisch angetriebenen Ölpumpe und/oder der mechanisch angetriebenen Ölpumpe geförderten Ölmenge mit gegebenem Förderdruck eine vergrößerte geförderte Ölmenge bei verringertem Förderdruck erzeugt wird, die zur Kühlung des Anfahrelementes verwendet wird. Es versteht sich in Kenntnis der Erfindung von selbst, dass hier nur der Druck desjenigen Teilölstroms reduziert wird, für den ein geringerer Öldruck ausreichend ist. Besonders einfach, kostengünstig und wartungsarm kann dies erreicht werden, indem als Umwandlungsmittel eine Venturidüse verwendet wird.

Da die elektrisch angetriebene Ölpumpe gerade bei abgeschaltetem Antriebsmotor und daher bei stehendem Generator eine ausreichende Ölversorgung sicherstellen soll, in der Startphase des Antriebsmotors die Belastung des Bordnetzes und einer im Fahrzeug befindlichen Batterie jedoch besonders groß sind, ist gemäß einer weiteren Ausgestaltung des Verfahrens vorgesehen, dass zur Versorgung der elektrisch angetriebenen Ölpumpe neben einem elektrischen Bordnetz und/oder einer Batterie auch ein Kondensator vorgesehen ist. Auf diese Weise kann z.B. bei einer gealterten Batterie mit geringer Leistungsfähigkeit zumindest ein Teil der für den Betrieb der Ölpumpe benötigten Energie über einen vergleichsweise großen Zeitraum im Kondensator gespeichert werden und steht zum kurzfristigen Abruf für den Ölpumpenmotor bereit.

Auch bei einer neuwertigen Batterie lassen sich so die Entladeströme der Batterie unmittelbar vor einem Start des Fahrmotors verringern und Spannungseinbrüche des Bordnetzes in jeder Betriebsphase der elektrisch betriebenen Ölpumpe minimieren. Geeignete Kondensatoren sind beispielsweise unter der Bezeichnung "Ultracap" bekannt.

Daneben ist es vorteilhaft, wenn eine Vorrichtung zur Beurteilung der zum Betrieb der elektrisch angetriebenen Ölpumpe zur Verfügung stehenden elektrischen Energiemenge vorgesehen ist, die bei Unterschreitung eines ersten Grenzwertes der zur Verfügung stehenden elektrischen Energiemenge ein erstes Unterschreitungssignal ausgibt. Die zur Verfügung stehende Energiemenge ist dabei bevorzugt eine kurzfristig abrufbare Energiemenge, deren Entnahme aus dem Bordnetz nicht zu unerwünschten Effekten wie unzulässigen Spannungseinbrüchen oder zu unerwünscht hohen Strömen in einem Teil des Bordnetzes oder der Fahrzeugbatterie führt.

Diese Vorrichtung kann beispielsweise eine ohnehin vorhandene sogenannte SOC-Überwachung oder SOH-Überwachung sein, wobei SOC für "State Of Charge", also den Ladezustand und SOH für "State Of Health", also den Gesundheitszustand bzw. die Alterung oder Schädigung einer Batterie steht.

Der Anfahrbetrieb, also die dem eigentlichen Starten des Antriebsmotors vorausgehende Bereitstellung eines ausreichenden Öldrucks, und der eigentliche Startvorgang des Antriebsmotors können bei Vorliegen des ersten Unterschreitungssignals so lange verhindert werden, bis der Kondensator zumindest weitgehend vollständig geladen ist, wodurch die Belastung der Batterie unmittelbar vor dem Anlassen des Fahrmotors stark verringert wird. Der Begriff der weitgehend vollständigen Ladung bezieht sich dabei auf die unter den gegebenen Umständen im Kondensator speicherbare elektrische Ladung und nicht auf die physikalisch mögliche oder maximale Ladung des Kondensators.

Dabei kann weiter vorgesehen sein, dass nach weitgehend vollständiger Ladung des Kondensators eine gewisse Zeitspanne bis zur Freigabe der Betätigung der elektrisch angetriebenen Ölpumpe verstreichen muss, damit sich die Batterie weitgehend von der vorangegangenen Stromentnahme erholen kann. Diese Wartezeit kann auch sinnvoll an das Vorliegen eines zweiten Unterschreitungssignals gekoppelt werden, welches nachfolgend genauer erläutert wird.

Wenn die Vorrichtung zur Beurteilung der zum Betrieb der elektrisch angetriebenen Ölpumpe zur Verfügung stehenden elektrischen Energiemenge bei Unterschreitung eines zweiten Grenzwertes der zur Verfügung stehenden elektrischen Energiemenge, der niedriger als der erste Grenzwert ist, ein zweites Unterschreitungssignal ausgibt, kann sinnvoll zwischen einem geringfügigen und/oder kurzzeitigen Leistungsengpass und einer gravierenden Störung in der Leistungsversorgung unterschieden werden. Während ersterem durch die oben beschriebenen Maßnahmen leicht begegnet werden kann, deutet das Vorliegen des zweiten Unterschreitungssignals auf ein gravierendes und/oder langanhaltendes Problem der elektrischen Leistungsversorgung der elektrisch angetriebenen Ölpumpe hin und ermöglicht so die Wahl spezieller Betriebsstrategien.

So ist es gemäß einer Ausgestaltung des erfindungsgemäßen Verfahrens vorgesehen, bei Vorliegen des zweiten Unterschreitungssignals die elektrisch angetriebene Ölpumpe nicht zu betreiben und den für den Anfahrbetrieb notwendigen Ölstrom zur Kühlung des Anfahrelementes allein durch die mechanisch vom Fahrmotor angetriebene Ölpumpe aufzubringen.

Dabei wird durch die hydraulische Steuereinrichtung des Automatgetriebes und/oder des Anfahrelementes der Anfahrvorgang so gestaltet, dass eine möglichst geringe Wärmemenge im Anfahrelement erzeugt wird. Auf diese Weise ist ein Notbetrieb des Fahrzeugs beispielsweise bei tiefentladener Batterie möglich, der für den Fahrer lediglich durch ein etwas verschlechtertes Anfahrverhalten des Fahrzeugs spürbar wird. Diese Strategie kann natürlich auch dann verwendet werden, wenn die elektrisch betriebene Ölpumpe durch einen anderen Umstand nicht betreiben werden kann.

Um die elektrisch betriebene Ölpumpe möglichst bedarfsgerecht zu steuern ist es schließlich sinnvoll, ein Ölmengenbedarfs-Ermittlungselement vorzusehen, welches den aktuellen und/oder den unmittelbar bevorstehenden Ölmengenbedarf der hydraulischen Steuereinrichtung des Automatgetriebes und/oder des Anfahrelementes erfasst sowie die durch die mechanisch vom Fahrmotor angetriebene Ölpumpe aktuell und/oder unmittelbar bevorstehende Ölpumpleistung ermittelt, und aus diesem Ölmengenbedarf und der Ölpumpleistung der mechanisch vom Fahrmotor angetrieben Ölpumpe einen Ölmengenmehrbedarf ermittelt.

Auf diese Weise kann die Pumpleistung der elektrisch angetriebenen Ölpumpe einerseits besonders genau gesteuert und so deren Energiebedarf minimiert werden, andererseits ermöglicht eine Abschätzung der unmittelbar bevorstehenden Werte, die Pumpleistung der elektrisch betriebenen Ölpumpe so frühzeitig anzupassen, dass stets auch unter Berücksichtigung eines Zeitverzuges bei der Ansteuerung der Pumpe, z. B. durch eine notwendige Beschleunigung von trägen Massen bei einer Erhöhung der Drehzahl, eine ausreichende Gesamtpumpleistung zur Verfügung steht.

Die Eingangsgrößen des Ölmengenbedarfs-Ermittlungselementes können dabei bevorzugt auf Sensorwerten basieren, aber auch z.B. mittels mathematischer Modelle und selbstlernender Verfahren oder anderer Abschätzungsmethoden ermittelt werden.

Da die Viskosität des Öls und dessen Fähigkeit zur Kühlung des Anfahrelementes wesentlich von der Öltemperatur abhängen, lässt sich eine weitere Verbesserung der Ölmengenbedarfsermittlung dadurch erreichen, dass bei der Ermittlung des Ölmengenbedarfs und/oder der Ölpumpleistung und/oder des Ölmengenmehrbedarfs die Öltemperatur berücksichtigt wird.

Eine energieoptimale Ausgestaltung des Verfahrens ergibt sich dabei dann, wenn die elektrisch angetriebene Ölpumpe so gesteuert wird, dass deren Förderleistung zumindest dem Ölmengenmehrbedarf entspricht, wobei der Begriff "entsprechen" hier durchaus die Bereithaltung einer Pumpleistungsreserve beinhalten kann.

Wie eingangs der Erfindungsbeschreibung kurz erwähnt betrifft die Erfindung auch ein Verfahren, mit der unterschiedliche Betriebsarten des Ölversorgungssystems gesteuert werden. So kann in einer ersten Betriebsart, bei der der Fahrzeugantriebsmotor abgeschaltet ist, vorgesehen sein,
- dass die mechanisch antreibbare Ölpumpe stillsteht und die elektrisch antreibbare Ölpumpe angetrieben wird,
- ein Umschaltventil derartig betätigt wird, dass die Schmierölversorgung des Getriebes und die Kühlölversorgung des Anfahrelementes durch die elektrisch angetriebene Ölpumpe zumindest größtenteils unterbunden ist,
- dass kein Öl über die mechanisch antreibbare Ölpumpe in das gemeinsame Ölreservoir abfließt und
- die elektrisch angetriebene Ölpumpe einen solchen Öldruck erzeugt und dieser zu einem Druckregler für die Schaltelemente des Automatgetriebes geleitet wird, dass damit diese Schaltelemente vorbefüllt gehalten oder vorbefüllt werden können.

Bei dieser Betriebsweise wird sichergestellt, dass auch bei abgeschaltetem Fahrmotor eine ausreichende Öldruckversorgung zur Vorbefüllung von Getriebeschaltelementen gewährleistet ist, so dass nach dem Anlassen des Fahrmotors ein Anfahren gegebenenfalls schnell durchführbar ist.

Ein Rückfluss über das Hauptdruckventil in das gemeinsame Ölreservoir wird dadurch verhindert, dass das Hauptdruckventil geschlossen ist oder ein Rückschlagventil zwischen der mechanisch antreibbaren Pumpe und dem Hauptdruckventil in Sperrstellung zu dieser Pumpe steht oder die mechanisch antreibbare Pumpe bei deren Nichtbetätigung selbst eine ausreichende Sperrwirkung erzeugt.

Gemäß einer zweiten Betriebsart, bei der das Fahrzeug anfährt, ist vorgesehen,
- dass die mechanisch antreibbare Ölpumpe und die elektrisch antreibbare Ölpumpe angetrieben werden,
- das Umschaltventil zur Kühlölversorgung des Anfahrelementes im Wesentlichen geöffnet ist,
- das Hauptdruckventil derartig eingestellt ist, dass an dem Druckregler ein zum Schalten der Schaltelemente des Getriebes ausreichend hoher Schaltdruck anliegt,
- durch das Hauptdruckventil ein Ölstrom mit einem Druck, der niedriger ist als der zu dem Druckregler führende Druck, zu dem Umschaltventil geleitet wird und
- die elektrisch angetriebene Ölpumpe zumindest noch denjenigen Ölstrom fördert, der in Addition mit dem von der mechanisch angetriebenen Ölpumpe bereitgestellten Ölstrom zur Kühlung des Anfahrelementes notwendig ist.

Bei dieser zweiten Betriebsart sind zwar beide Ölpumpen im Betrieb, jedoch wird die Leistungsaufnahme der elektrisch antreibbaren Ölpumpe nur auf den für einen sicheren Betrieb unbedingt notwenigen Umfang begrenzt, welches letztlich Kraftstoff spart und unnötige Schadstoffemissionen vermeidet.

In einer eine dritte Betriebsart ist vorgesehen,
- dass die mechanisch antreibbare Ölpumpe angetrieben wird und die elektrisch antreibbare Ölpumpe stillsteht,
- das Umschaltventil zur Schmierölversorgung des Getriebes geöffnet ist und zur Kühlölversorgung des Anfahrelementes im Wesentlichen geschlossen ist,
- das Hauptdruckventil derartig eingestellt ist, dass an dem Druckregler ein zum Schalten der Schaltelemente des Getriebes ausreichend hoher Schaltdruck anliegt,
- durch das Hauptdruckventil ein Ölstrom mit einem Druck, der niedriger ist als der zu dem Druckregler führende Druck, zu dem Umschaltventil geleitet wird und
- ein Rückschlagventil stromaufwärts vor der elektrisch antreibbaren Ölpumpe durch den Druck des über das Hauptschaltventil zugeführten Ölstroms derart geschlossen ist, dass ein Abströmen von Öl über die abgeschaltete elektrisch antreibbare Ölpumpe nicht erfolgen kann.

Bei dieser dritten Betriebsart befindet sich das Fahrzeug längere Zeit nach einem Anfahrvorgang mit mittlerer oder hoher Fahrmotordrehzahl beispielsweise in schneller Fahrt, so dass die mechanisch antreibbare Pumpe alle Verbraucher im Ölversorgungssystem ausreichend versorgen kann. Eine Nachkühlung des Anfahrelementes erfolgt nur noch in geringem Umfang. Die Elektropumpe ist vollständig abgeschaltet, welches die oben genannten Vorteile erzeugt.

Die Erfindung betrifft auch eine Vorrichtung zur Steuerung einer Ölversorgung für ein Automatgetriebe und ein Anfahrelement in einem Fahrzeug gemäß dem Anspruch 1.

Mit dieser Vorrichtung sind die oben genannten grundlegenden Verfahrensregeln durchführbar, so dass die dort beschriebenen vorteilhaften Effekte erreicht werden.

In einer vorteilhaften Ausgestaltung der Erfindung ist vorgesehen, dass die genannte Verbindungsleitung zwischen einem Rückschlagventil und einem Ölkühler in den Niederdruckzweig der Ölversorgung mündet.

Zudem wird es als vorteilhaft beurteilt, wenn in einer Vorbefüllleitung zwischen dem Hauptdruckzweig und der Verbindungsleitung ein Rückschlagventil angeordnet ist, welches ein Einströmen von Öl unter Hauptdruck in den Niederdruckzweig verhindert, jedoch ein Einströmen von Öl unter Niederdruck in den Hauptdruckzweig ermöglicht.

Schließlich kann vorgesehen sein, dass im Niederdruckzweig stromab hinter dem Ölkühler ein Umschaltventil mit Sperrstellung angeordnet ist, von dem eine Ölleitung zu Elementen einer Getriebeschmierung und eine Ölleitung zu Elementen einer Anfahrelementkühlung abgeht, welches öffnend oder hinsichtlich der durchzulassenden Ölmenge pro Zeiteinheit getaktet angesteuert werden kann.

Das beschriebene Verfahren und die genannte Vorrichtung können vorteilhaft bei jedem Fahrzeug eingesetzt werden, welches gemäß der Gattung des Anspruchs 1 ausgestattet ist. Besondere Vorteile ergeben sich jedoch bei Fahrzeugen mit einer Start-Stopp-Funktionalität und bei Fahrzeugen mit einem Hybridantrieb als Fahrmotor, da diese Fahrzeuge meist in besonders starkem Maße auf Energieeffizienz ausgelegt sind.

Außerdem sei bemerkt, dass an Stelle von zwei baulich getrennten Ölpumpen auch eine Pumpeneinrichtung verwendet werden kann, welche wahlweise oder auch gleichzeitig sowohl mechanisch von einem Fahrmotor als auch elektrisch über einen Elektromotor angetrieben werden kann. Ein solcher Aufbau lässt sich z.B. leicht durch eine durchgehende Pumpenwelle mit an entgegengesetzten Enden angebrachten Freilaufkupplungen realisieren. In diesem Fall würde dann, wenn die durch den Elektroantrieb bereitgestellte Leistung die Leistungsabgabe durch den Antriebsmotor übersteigt, die Kupplung zu diesem freilaufen.

Andererseits wäre es möglich, die durch einen Antriebsmotor des Fahrzeugs eingebrachte Leistung und eine geringere Leistung des elektrischen Pumpenantriebs in der Pumpe zusammenzuführen. Eine solche Ölpumpe mit zwei unterschiedlichen Antrieben entspricht daher den vorstehend genannten zwei baulich getrennten Ölpumpen. Schließlich ist es möglich, mehr als nur eine Elektropumpe vorzusehen, wobei jede dieser beispielsweise zwei Elektropumpen einen gesonderten Ölkreis speist.

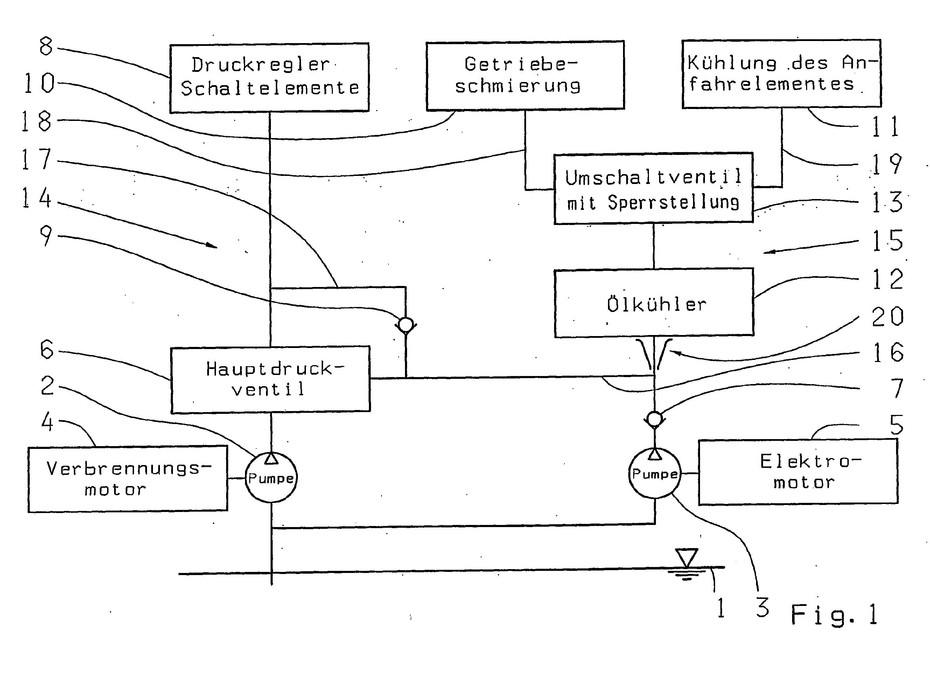

Die Erfindung lässt sich anhand eines Ausführungsbeispiels weiter erläutern, welches sich der beigefügten Zeichnung bedient. Diese zeigt in der einzigen Figur ein schematisch dargestelltes Hydraulikschema eines Ölversorgungssystems in einem Fahrzeug zur Durchführung des erfindungsgemäßen Verfahrens. Dieses Ölversorgungssystem weist links einen Hauptdruckzweig 14 und rechts einen Niederdruckzweig 15 auf.

Aus einem gemeinsamen Ölreservoir 1, das beispielsweise der Ölsumpf eines Getriebes und/oder einer ölgekühlten Reibkupplung sein kann, führt eine sich verzweigende Ölleitung zu den Ansaugseiten zweier Ölpumpen, wobei die erste Ölpumpe 2 mechanisch von einem Verbrennungsmotor 4 und die zweite Ölpumpe 3 durch einen Elektromotor 5 angetrieben wird. Die Ausstoß- oder Druckseiten dieser Pumpen 2 und 3 sind über ein Hauptdruckventil 6 miteinander verbindbar, wobei ein hinter der elektrisch angetriebenen Ölpumpe 3 angebrachtes erstes Rückschlagventil 7 ein Zurückströmen des Öls durch die Ölpumpe 3 in das Reservoir 1 auch dann verhindert, wenn der Elektromotor 5 abgeschaltet ist.

Beide Ölpumpen 2, 3 sind über das Hauptdruckventil 6 mit einem Druckregler und Schaltelementen 8 oder anderen hydraulischen Steuereinrichtungen verbunden, welche beispielsweise mit hydraulischen Aktuatoren innerhalb eines Automatgetriebes und/oder mit hydraulischen Aktuatoren für die Einstellung eines Anfahrelementes, insbesondere einer ölgekühlten Reibkupplung (beides nicht gezeigt) verbunden sind.

Dabei gestattet ein zweites Rückschlagventil 9 in einer Vorbefüllleitung 17 den Zufluss von durch die elektrisch angetriebene Ölpumpe 3 gefördertem Öl in dem Hauptdruckzweig 14, verhindert jedoch den Fluss in umgekehrter Richtung. Beide Ölpumpen 2, 3 sind über das Hauptdruckventil 6 bzw. über das erste Rückschlagventil 7 mit einem zweiten Leitungszweig, dem Niederdruckzweig 15, verbunden, der Elemente 10 zur Schmierung des Getriebes und Elemente 11 zur Kühlung des Anfahrelementes versorgt. In diesem Niederdruckzweig 15 ist zudem ein Ölkühler 12 und ein Umschaltventil 13 mit Sperrstellung vorhanden, wobei mit letzterem der Ölstrom dieses Ölkreises 15 durch Ölleitungen 18 bzw. 19 auf die Elemente 10 zur Getriebeschmierung und Elemente 11 zur Kühlung des Anfahrelementes verteilbar ist. Das Öl fließt anschließend jeweils zurück in das Ölreservoir 1 (nicht dargestellt).

Bei einem Startvorgang des Fahrzeugs wird zunächst mittels des Elektromotors 5 die Pumpe 3 angetrieben, welche einen Ölstrom mit geeignetem Druck über das Hauptdruckventil 6 bzw. über das zweite Rückschlagventil 9 an den Druckregler 8 für die Schaltelemente liefert, um zumindest eine Vorbefüllung der Schaltglieder des Automatgetriebes aufrecht zu erhalten und/oder eine Schaltung von wenigstens einem der Anfahrelemente bzw. ein schnelles Anfahren zu ermöglichen. Das Umschaltventil 13 ist zu diesem Zeitpunkt geschlossen, so dass die gesamte von der elektrischen Ölpumpe 3 erzeugte Pumpleistung (abzüglich der Leitungsverluste) am Druckregler 8 anliegt und für die Schaltelemente zur Verfügung steht.

Sobald sich das Getriebe und das Anfahrelement in geeigneten Stellungen befinden, wird der Start des Verbrennungsmotors 4 freigegeben, welcher nach seinem Anspringen über eine drehzahlfeste mechanische Koppelung die Ölpumpe 2 antreibt.

Die durch die mechanisch angetriebene Ölpumpe 2 erzeugte Pumpleistung wird durch das Hauptdruckventil 6 sowohl an den Druckregler 8 für die Schaltelemente, als auch an die Elemente 10 zur Getriebeschmierung und an die Elemente 11 zur Kühlung des Anfahrelementes weitergegeben, wobei das Verteilungsverhältnis und die jeweiligen Öldrücke im Hauptdruckventil 6 einstellbar ist.

Zugleich kann die durch den Elektromotor 5 angetriebene Ölpumpe 3 eine ergänzende Pumpleistung an den Druckregler 8 und die Schaltelemente sowie an die Elemente 10, 11 zur Getriebeschmierung und zur Kühlung des Anfahrelementes 11 bereitstellen. Das Umschaltventil 13 wird spätestens kurz nach dem Anspringen des Verbrennungsmotors 4 geöffnet, kann aber bei Bedarf auch schon vorher zumindest teilweise geöffnet werden, um auch in der Phase vor dem Start des Verbrennungsmotors eine optimale Schmierung des Getriebes sowie eine gute Füllung des Anfahrelementes mit Kühlöl zu gewährleisten.

Schließlich ist in der Figur als besondere Variante im Niederdruckzweig 15 zwischen dem Rückschlagventil 7 und dem Ölkühler 12 eine Venturidüse 20 angeordnet, mit deren Hilfe der Ölstrom von der mechanisch antreibbaren Pumpe und/oder von der elektromotorisch antreibbaren Pumpe im Niederdruckkreis 15 unter Inkaufnahme eines Druckabfalls erhöht werden kann.

### Bezugszeichen

- 1: Ölreservoir
- 2: erste Ölpumpe, durch den Verbrennungsmotor 4 angetrieben
- 3: zweite Ölpumpe, durch den Elektromotor 5 angetrieben
- 4: Verbrennungsmotor, Fahrmotor, Antriebsmotor
- 5: Elektromotor
- 6: Hauptdruckventil
- 7: erstes Rückschlagventil
- 8: Druckregler für Schaltelemente
- 9: zweites Rückschlagventil
- 10: Elemente zur Getriebeschmierung
- 11: Elemente zur Kühlung des Anfahrelementes
- 12: Ölkühler
- 13: Umschaltventil mit Sperrstellung
- 14: Hauptdruckzweig der Ölversorgung
- 15: Niederdruckzweig der Ölversorgung
- 16: Verbindungsleitung
- 17: Vorbefüllleitung
- 18: Ölleitung
- 19: Ölleitung
- 20: Umwandlungsmittel, Venturidüse

## Patentansprüche

1. Vorrichtung zur Steuerung einer Ölversorgung für ein Automatgetriebe und ein Anfahrelement in einem Fahrzeug, mit einer mechanisch von einem Fahrmotor (4) des Fahrzeugs antreibbaren Pumpe (2) und einer von einem Elektromotor (5) antreibbaren Pumpe (3), mit einem Druckregler (8) für Getriebeschaltelemente im Hauptdruckzweig (14) der Ölversorgung, mit einer Getriebeschmierung (10) und mit einer Anfahrelementkühlung (11) im Niederdruckzweig (15) der Ölversorgung, sowie mit einer Verbindungsleitung (16) zwischen dem Hauptdruckzweig (14) und dem Niederdruckzweig (15) der Ölversorgung, wobei im Hauptdruckzweig (14) ein Hauptdruckventil (6) angeordnet ist, mit dem ein von einer der Pumpen (2, 3) erzeugter Öldruck auf einen Hauptdruck zur Versorgung des Hauptdruckzweiges (14) und einen Niederdruck zur Versorgung des Niederdruckzweiges (15) einstellbar ist und wobei die Verbindungsleitung (16) einen Niederdruckausgang des Hauptventils (6) und den Niederdruckzweig (15) der Ölversorgung miteinander verbindet, **dadurch gekennzeichnet, dass** die mechanisch antreibbare Pumpe (2) im Hauptdruckzweig (14) und die elektrisch antreibbare Pumpe (15) im Niederdruckzweig (15) der Ölversorgung angeordnet ist, dass die mechanisch antreibbare Pumpe (2) den Öldruck zur Einstellung des Hauptdrucks und des Niederdrucks durch das Hauptdruckventil (6) erzeugt, wobei im Niederdruckzweig (15) ein Umschaltventil (13) mit Sperrstellung angeordnet ist, von dem eine Ölleitung (18) zu Elementen (10) einer Getriebeschmierung und eine Ölleitung (19) zu Elementen (11) einer Anfahrelementkühlung abgeht, welches öffnend oder hinsichtlich der durchzulassenden Ölmenge pro Zeiteinheit getaktet angesteuert werden kann.

2. Vorrichtung nach Anspruch 1, **dadurch gekennzeichnet, dass** die Verbindungsleitung (16) zwischen einem Rückschlagventil (7) und einem Ölkühler (12) in den Niederdruckzweig (15) der Ölversorgung mündet.

3. Vorrichtung nach Anspruch 1 oder 2, **dadurch gekennzeichnet, dass** in einer Vorbefüllleitung (17) zwischen dem Hauptdruckzweig (14) und der Verbindungsleitung (16) ein Rückschlagventil (9) angeordnet ist, welches ein Einströmen von Öl unter Hauptdruck in den Niederdruckzweig (15) verhindert, jedoch ein Einströmen von Öl unter Niederdruck in den Hauptdruckzweig (14) ermöglicht.

4. Verfahren zur Steuerung einer Ölversorgung für ein Automatgetriebe und ein Anfahrelement in einem Fahrzeug, mit der Vorrichtung nach Anspruch 1 oder 2 oder 3, **dadurch gekennzeichnet, dass** die elektrisch antreibbare Ölpumpe (3) zumindest bei Stillstand des Fahrmotors (4) und bei Vorliegen weiterer Betriebsbedingungen eine Ölpumpleistung zur Versorgung einer hydraulischen Steuereinrichtung des Automatgetriebes bereitstellt, wobei die elektrisch angetriebene Ölpumpe (3) zumindest im Anfahrbetrieb des Fahrzeugs einen Niederdruck-Ölstrom zur Anfahrelementkühlung (11) bereit stellt.

5. Verfahren nach Anspruch 4, **dadurch gekennzeichnet, dass** die mechanisch angetriebene Ölpumpe (2) nach einem abgeschlossenen Anfahrvorgang während eines normalen Fahrbetriebszustandes zumindest den überwiegenden Teil des zur Nachkühlung des Anfahrelementes verwendeten Ölstromes bereitstellt.

6. Verfahren nach Anspruch 4 oder 5, **dadurch gekennzeichnet, dass** die mechanisch angetriebene Ölpumpe (2) während eines normalen Fahrtbetriebszustands den zur Kühlung des Anfahrelementes verwendeten Ölstrom zumindest annähernd allein bereitstellt.

7. Verfahren nach einem der Ansprüche 4 bis 6, **dadurch gekennzeichnet, dass** die mechanisch angetriebene Ölpumpe (2) so ausgelegt ist, dass diese nicht alleine einen für den Anfahrbetrieb ausreichenden Ölstrom zur Kühlung des Anfahrelementes bereit stellten kann.

8. Verfahren nach einem der Ansprüche 4 bis 7, **dadurch gekennzeichnet, dass** die elektrisch angetriebene Ölpumpe (3) so ausgelegt ist, dass diese alleine einen zur Versorgung einer hydraulischen Steuereinrichtung des Automatgetriebes und/oder des Anfahrelementes und/oder zur Kühlung des Anfahrelementes ausreichenden Ölstrom bereit stellten kann.

9. Verfahren nach einem der Ansprüche 4 bis 8, **dadurch gekennzeichnet, dass** die mechanisch angetriebene Pumpe (2) und/oder die elektrisch angetriebene Ölpumpe (3) so mit einem Umwandlungsmittel (20) zusammenwirken, dass aus einer von wenigstens einer dieser Ölpumpen (2, 3) geförderten Ölmenge mit gegebenem Förderdruck eine vergrößerte geförderte Ölmenge bei verringertem Förderdruck erzeugt wird, die zur Kühlung des Anfahrelementes verwendet wird.

10. Verfahren nach Anspruch 9, **dadurch gekennzeichnet, dass** als Umwandlungsmittel (20) eine Venturidüse verwendet wird.

11. Verfahren nach einem der Ansprüche 4 bis 10, **dadurch gekennzeichnet, dass** die elektrisch angetriebene Ölpumpe (2) bei abgeschaltetem Fahrmotor (4) mit elektrischem Strom aus einer Batterie und/oder einem Kondensator versorgt wird.

12. Verfahren nach einem der Ansprüche 4 bis 11, **dadurch gekennzeichnet, dass** eine Vorrichtung zur Beurteilung der zum Betrieb der elektrisch angetriebenen Ölpumpe (3) zur Verfügung stehenden elektrischen Energiemenge verwendet wird, die bei Unterschreitung eines ersten Grenzwertes der zur Verfügung stehenden elektrischen Energiemenge ein erstes Unterschreitungssignal ausgibt.

13. Verfahren nach Anspruch 12, **dadurch gekennzeichnet, dass** der Anfahrbetrieb bei Vorliegen des ersten Unterschreitungssignals so lange verhindert wird, bis der Kondensator zumindest weitgehend vollständig aufgeladen ist.

14. Verfahren nach einem der Ansprüche 12 oder 13, **dadurch gekennzeichnet, dass** die Vorrichtung zur Beurteilung der zum Betrieb der elektrisch angetriebenen Ölpumpe (3) zur Verfügung stehenden elektrischen Energiemenge bei Unterschreitung eines zweiten Grenzwertes der zur Verfügung stehenden elektrischen Energiemenge, der niedriger als der erste Grenzwert ist, ein zweites Unterschreitungssignal ausgibt.

15. Verfahren nach Anspruch 14, **dadurch gekennzeichnet, dass** bei Vorliegen des zweiten Unterschreitungssignals die elektrisch angetriebene Ölpumpe (3) nicht betrieben wird, dass der für den Anfahrbetrieb notwendige Ölstrom zur Kühlung des Anfahrelementes allein durch die mechanisch vom Fahrmotor (4) angetriebene Ölpumpe (2) aufgebracht wird, und dass die hydraulische Steuereinrichtung des Automatgetriebes und/oder des Anfahrelementes den Anfahrvorgang so gestaltet, dass eine möglichst geringe Wärmemenge im Anfahrelement erzeugt wird.

16. Verfahren nach einem der Ansprüche 4 bis 15, **dadurch gekennzeichnet, dass** ein Ölmengenbedarfs-Ermittlungselement genutzt wird, welches den aktuellen und/oder den unmittelbar bevorstehenden Ölmengenbedarf der hydraulischen Steuereinrichtung des Automatgetriebes und/oder des Anfahrelementes erfasst, die durch die mechanisch vom Fahrmotor (4) angetriebene Ölpumpe (2) aktuell und/oder unmittelbar bevorstehende Ölpumpleistung ermittelt und aus dem Ölmengenbedarf und der Ölpumpleistung der mechanisch vom Fahrmotor (4) angetrieben Ölpumpe (2) einen Ölmengenmehrbedarf ermittelt.

17. Verfahren nach Anspruch 16, **dadurch gekennzeichnet, dass** bei der Ermittlung des Ölmengenbedarfs und/oder der Ölpumpleistung und/oder des Ölmengenmehrbedarfs die Öltemperatur berücksichtigt wird.

18. Verfahren nach einem der Ansprüche 16 oder 17,**dadurch gekennzeichnet, dass** die elektrisch angetriebene Ölpumpe (3) so gesteuert wird, dass deren Förderleistung zumindest dem Ölmengenmehrbedarf entspricht.

19. Verfahren nach einem der Ansprüche 4 bis 18, **dadurch gekennzeichnet, dass** als Antrieb ein Hybridantrieb genutzt wird.

20. Verfahren nach einem der Ansprüche 4 bis 19, **dadurch gekennzeichnet, dass** ein gemäß den vorstehenden Ansprüchen betriebenes Kraftfahrzeug mit einer Start-Stop-Funktionalität ausgestattet ist.

21. Verfahren nach einem der Ansprüche 4 bis 20, **gekennzeichnet durch** eine erste Betriebsart,
- in der die mechanisch antreibbare Ölpumpe (2) stillsteht und die elektrisch antreibbare Ölpumpe (3) angetrieben wird,
- das Umschaltventil (13) derartig betätigt wird, dass die Schmierölversorgung (10) des Getriebes und die Kühlölversorgung des Anfahrelementes (11) über die elektrisch angetriebene Ölpumpe (3) zumindest größtenteils unterbunden ist,
- dass kein Öl **durch** die mechanisch antreibbare Ölpumpe (2) in ein gemeinsames Ölreservoir (1) abfließen kann und
- die elektrisch angetriebene Ölpumpe (3) einen solchen Öldruck erzeugt und dieser zu dem Druckregler (8) für die Schaltelemente des Automatgetriebes geleitet wird, dass damit diese Schaltelemente vorbefüllt gehalten oder vorbefüllt werden können.

22. Verfahren nach einem der Ansprüche 4 bis 21, **gekennzeichnet durch** eine zweite Betriebsart,
- in der die mechanisch antreibbare Ölpumpe (2) und die elektrisch antreibbare Ölpumpe (3) angetrieben werden,
- das Umschaltventil (13) zur Kühlölversorgung des Anfahrelementes (11) im Wesentlichen geöffnet ist,
- das Hauptdruckventil (2) derartig eingestellt ist, dass an dem Druckregler (8) ein zum Schalten der Schaltelemente des Getriebes ausreichend hoher Schaltdruck anliegt,
- **durch** das Hauptdruckventil (2) ein Ölstrom mit einem Druck, der niedriger ist als der zu dem Druckregler (8) führende Druck, zu dem Umschaltventil (13) geleitet wird und
- die elektrisch angetriebene Ölpumpe (3) zumindest noch denjenigen Ölstrom fördert, der in Addition mit dem von der mechanisch angetriebenen Ölpumpe (2) bereitgestellten Ölstrom zur Kühlung des Anfahrelementes (11) notwendig ist.

23. Verfahren nach einem der Ansprüche 4 bis 22, **gekennzeichnet durch** eine dritte Betriebsart
- in der die mechanisch antreibbare Ölpumpe (2) angetrieben wird und die elektrisch antreibbare Ölpumpe (3) stillsteht,
- das Umschaltventil (13) zur Schmierölversorgung (10) des Getriebes geöffnet ist und zur Kühlölversorgung des Anfahrelementes (11) im Wesentlichen geschlossen ist,
- das Hauptdruckventil (2) derartig eingestellt ist, dass an dem Druckregler (8) ein zum Schalten der Schaltelemente des Getriebes ausreichend hoher Schaltdruck anliegt,
- **durch** das Hauptdruckventil (2) ein Ölstrom mit einem Druck, der niedriger ist als der zu dem Druckregler (8) führende Druck, zu dem Umschaltventil (13) geleitet wird und
- ein Rückschlagventil (7) stromaufwärts vor der elektrisch antreibbaren Ölpumpe (3) **durch** den Druck des über das Hauptschaltventil (6) zugeführten Ölstroms derart geschlossen ist, dass ein Abströmen von Öl über die abgeschaltete elektrisch antreibbare Ölpumpe (3) nicht erfolgen kann.

## Claims

1. Device for the control of an oil supply for an automatic transmission and a starting element in a vehicle, with a pump (2) drivable mechanically by an engine (4) of the vehicle and a pump (3) drivable by an electric motor (5), with a pressure regulator (8) for transmission shift elements in the main-pressure branch (14) of the oil supply, with transmission lubrication (10) and with starting-element cooling (11) in the low-pressure branch (15) of the oil supply, and also with a connecting line (16) between the main-pressure branch (14) and the low-pressure branch (15) of the oil supply, the main-pressure branch (14) having arranged in it a main-pressure valve (6), by means of which an oil pressure generated by one of the pumps (2, 3) can be set to a main pressure for supplying the main-pressure branch (14) and to a low pressure for supplying the low-pressure branch (15), and the connecting line (16) connecting a low-pressure outlet of the main valve (6) and the low-pressure branch (15) of the oil supply to one another, **characterized in that** the mechanically drivable pump (2) is arranged in the main-pressure branch (14) and the electrically drivable pump (15) is arranged in the low-pressure branch (15) of the oil supply, and **in that** the mechanically drivable pump (2) generates the oil pressure for setting the main pressure and the low pressure by means of the main-pressure valve (6), the low-pressure branch (15) having arranged in it a changeover valve (13) with a shut-off position, from which an oil line (18) emanates to elements (10) of a transmission lubrication and an oil line (19) emanates to elements (11) of the starting-element cooling emanate and which can be controlled with an opening effect or in a clocked manner with regard to the oil quantity to be admitted per unit time.

2. Device according to Claim 1, **characterized in that** the connecting line (16) issues into the low-pressure branch (15) of the oil supply between a non-return valve (7) and an oil cooler (12).

3. Device according to Claim 1 or 2, **characterized in that** a pre-filling line (17) has arranged in it between the main-pressure branch (14) and the connecting line (16) a non-return valve (9) which prevents an inflow of oil under main pressure into the low-pressure branch (15), but allows an inflow of oil under low pressure into the main-pressure branch (14).

4. Method for the control of an oil supply for an automatic transmission and a starting element in a vehicle by means of the device according to Claim 1 or 2 or 3, **characterized in that** the electrically drivable oil pump (3) provides, at least when the engine (4) is at a standstill and in the presence of further operating conditions an oil-pumping capacity for supplying a hydraulic control arrangement of the automatic transmission, the electrically driven oil pump (3) providing, at least when the vehicle is in a starting mode, a low-pressure oil stream for starting-element cooling (11).

5. Method according to Claim 4, **characterized in that**, after a starting operation is concluded, the mechanically driven oil pump (2) provides, during a normal driving state, at least the predominant part of the oil stream used for the re-cooling of the starting element.

6. Method according to Claim 4 or 5, **characterized in that**, during a normal driving state, the mechanically driven oil pump (2) virtually completely alone provides the oil stream used for cooling the starting element.

7. Method according to one of Claims 4 to 6, **characterized in that** the mechanically driven oil pump (2) is designed so that it can provide, not on its own, an oil stream for cooling the starting element which is sufficient for starting.

8. Method according to one of Claims 4 to 7, **characterized in that** the electrically driven oil pump (3) is designed so that it, on its own, can provide an oil stream sufficient for supplying a hydraulic control arrangement of the automatic transmission and/or the starting element and/or for cooling the starting element.

9. Method according to one of Claims 4 to 8, **characterized in that** the mechanically driven pump (2) and/or the electrically driven oil pump (3) cooperate/co-operates with a conversion means (20) such that an enlarged conveyed oil quantity with reduced conveying pressure, which is used for cooling the starting element, is generated from an oil quantity with a given conveying pressure which is conveyed by at least one of these oil pumps (2, 3).

10. Method according to Claim 9, **characterized in that** the conversion means (20) used is a Venturi tube.

11. Method according to one of Claims 4 to 10, **characterized in that**, with the engine (4) switched off, the electrically driven oil pump (2) is supplied with electrical current from a battery and/or a capacitor.

12. Method according to one of Claims 4 to 11, **characterized in that** a device for assessing the electrical energy quantity available for operating the electrically driven oil pump (3) is used, which outputs a first undershoot signal when a first limit value of the available electrical energy quantity is undershot.

13. Method according to Claim 12, **characterized in that**, when the first undershoot signal is present, starting is prevented until the capacitor is at least essentially completely charged.

14. Method according to either one of Claims 12 and 13, **characterized in that** the device for assessing the electrical energy quantity available for operating the electrically driven oil pump (3) outputs a second undershoot signal when a second limit value of the available electrical energy quantity which is lower than the first limit value is undershot.

15. Method according to Claim 14, **characterized in that**, when the second undershoot signal is present, the electrically driven oil pump (3) is not operated, **in that** the oil stream for cooling the starting element which is necessary for starting is applied only by the oil pump (2) driven mechanically by the engine (4), and **in that** the hydraulic control arrangement of the automatic transmission and/or the starting element organizes the starting operation such that as low a heat quantity as possible is generated in the starting element.

16. Method according to one of Claims 4 to 15, **characterized in that** an oil-quantity demand determination element is used, which detects the current and/or immediately imminent oil-quantity demand of the hydraulic control arrangement of the automatic transmission and/or of the starting element, determines the current and/or immediately imminent oil-pumping capacity of the oil pump (2) driven mechanically by the engine (4), and determines an oil-quantity extra demand from the oil-quantity demand and the oil-pumping capacity of the oil pump (2) driven mechanically by the engine (4).

17. Method according to Claim 16, **characterized in that** the oil temperature is taken into account in the determination of the oil-quantity demand and/or of the oil-pumping capacity and/or of the oil-quantity extra demand.

18. Method according to either one of Claims 16 and 17, **characterized in that** the electrically driven oil pump (3) is controlled such that its conveying capacity corresponds at least to the oil-quantity extra demand.

19. Method according to one of Claims 4 to 18, **characterized in that** the drive used is a hybrid drive.

20. Method according to one of Claims 4 to 19, **characterized in that** a motor vehicle operated according to the preceding claims is equipped with a start/stop functionality.

21. Method according to one of Claims 4 to 20, **characterized by** a first operating mode,
- in which the mechanically drivable oil pump (2) is stationary and the electrically drivable oil pump (3) is driven,
- the changeover valve (13) is actuated in such a way that the lubricating-oil supply (10) of the transmission and the cooling-oil supply of the starting element (11) are prevented at least for the most part by the electrically driven oil pump (3),
- no oil can flow out into a common oil reservoir (1) through the mechanically drivable oil pump (2), and
- the electrically driven oil pump (3) generates such an oil pressure, and this is conducted to the pressure regulator (8) for the shift elements of the automatic transmission, and these shift elements can thereby be kept pre-filled or be pre-filled.

22. Method according to one of Claims 4 to 21, **characterized by** a second operating mode,
- in which the mechanically drivable oil pump (2) and the electrically drivable oil pump (3) are driven,
- the changeover valve (13) is essentially opened for the cooling-oil supply of the starting element (11),
- the main-pressure valve (2) is set in such a way that a shift pressure sufficiently high for shifting the shift elements of the transmission prevails at the pressure regulator (8),
- an oil stream with a pressure which is lower than the pressure leading to the pressure regulator (8) is conducted to the changeover valve (13) by means of the main-pressure valve (2), and
- the electrically driven oil pump (3) at least still conveys that oil stream which, in addition to the oil stream provided by the mechanically driven oil pump (2), is necessary for cooling the starting element (11).

23. Method according to one of Claims 4 to 22, **characterized by** a third operating mode,
- in which the mechanically drivable oil pump (2) is driven and the electrically drivable oil pump (3) is stationary,
- the changeover valve (13) is opened for the lubricating-oil supply (10) of the transmission and is essentially closed for the cooling-oil supply of the starting element (11),
- the main-pressure valve (2) is set in such a way that a shift pressure which is sufficiently high for shifting the shift elements of the transmission prevails at the pressure regulator (8),
- an oil stream with a pressure which is lower than the pressure leading to the pressure regulator (8) is conducted to the changeover valve (13) by means of the main-pressure valve (2), and
- a non-return valve (7) upstream of the electrically drivable oil pump (3) is closed by the pressure of the oil stream fed by the main shift valve (6) in such a way that an outflow of oil via the switched-off electrically drivable oil pump (3) cannot take place.

## Revendications

1. Dispositif pour commander une alimentation en huile pour une boîte de vitesses automatique et un élément de démarrage dans un véhicule, avec une pompe (2) pouvant être entraînée mécaniquement par un moteur de propulsion (4) du véhicule et une pompe (3) pouvant être entraînée par un moteur électrique (5), avec un régulateur de pression (8) pour des éléments de changement de vitesse dans la branche haute pression (14) de l'alimentation en huile, avec une lubrification de la boîte de vitesses (10) et avec un refroidissement (11) de l'élément de démarrage dans la branche basse pression (15) de l'alimentation en huile, ainsi qu'avec une conduite de raccordement (16) entre la branche haute pression (14) et la branche basse pression (15) de l'alimentation en huile, dans lequel une soupape haute pression (6) est disposée dans la branche haute pression (14) avec laquelle une pression d'huile produite par une des pompes (2, 3) peut être réglée à une haute pression pour l'alimentation de la branche haute pression (14) et à une basse pression pour l'alimentation de la branche basse pression (15), et dans lequel la conduite de raccordement (16) relie l'une à l'autre une sortie basse pression de la soupape principale (6) et la branche basse pression (15) de l'alimentation en huile, **caractérisé en ce que** la pompe (2) pouvant être entraînée mécaniquement est disposée dans la branche haute pression (14) et la pompe (15) pouvant être entraînée électriquement est disposée dans la branche basse pression (15) de l'alimentation en huile, **en ce que** la pompe (2) pouvant être entraînée mécaniquement produit la pression d'huile pour le réglage de la haute pression et de la basse pression par la soupape haute pression (6), dans lequel une soupape d'inversion (13) avec une position d'arrêt est disposée dans la branche basse pression (15), soupape de laquelle partent une conduite d'huile (18) vers des éléments (10) d'une lubrification de la boîte de vitesses et une conduite d'huile (19) vers des éléments (11) d'un refroidissement de l'élément de démarrage, et qui peut être commandée en ouverture ou en ce qui concerne la quantité d'huile à laisser passer en cadence par unité de temps.

2. Dispositif selon la revendication 1, **caractérisé en ce que** la conduite de raccordement (16) débouche dans la branche basse pression (15) de l'alimentation en huile entre un clapet anti-retour (7) et un refroidisseur d'huile (12).

3. Dispositif selon la revendication 1 ou 2, **caractérisé en ce qu'**un clapet anti-retour (9) est disposé dans une conduite de préremplissage (17) entre la branche haute pression (14) et la conduite de raccordement (16), lequel empêche une entrée d'huile sous haute pression dans la branche basse pression (15), mais permet cependant une entrée d'huile sous basse pression dans la branche haute pression (14).

4. Procédé pour commander une alimentation en huile pour une boîte de vitesses automatique et un élément de démarrage dans un véhicule, avec le dispositif selon la revendication 1 ou 2 ou 3, **caractérisé en ce que** la pompe à huile (3) pouvant être entraînée électriquement fournit, au moins à l'arrêt du moteur de propulsion (4) et en présence d'autres conditions de fonctionnement, une puissance de pompage d'huile pour l'alimentation d'un dispositif de commande hydraulique de la boîte de vitesses automatique, dans lequel la pompe à huile (3) entraînée électriquement fournit un courant d'huile basse pression au refroidissement de l'élément de démarrage (11) au moins pendant la phase de démarrage du véhicule.

5. Procédé selon la revendication 4, **caractérisé en ce que** la pompe à huile (2) entraînée mécaniquement fournit la partie principale du courant d'huile utilisé pour le refroidissement de l'élément de démarrage pendant un état de marche normale du véhicule après la fin d'un processus de démarrage.

6. Procédé selon la revendication 4 ou 5, **caractérisé en ce que** la pompe à huile (2) entraînée mécaniquement fournit au moins à peu près seule le courant d'huile utilisé pour le refroidissement de l'élément de démarrage pendant un état de marche normale du véhicule.

7. Procédé selon l'une quelconque des revendications 4 à 6, **caractérisé en ce que** la pompe à huile (2) entraînée mécaniquement est conçue de telle manière qu'elle ne puisse pas fournir seule, pour le refroidissement de l'élément de démarrage, un courant d'huile suffisant pour la phase de démarrage.

8. Procédé selon l'une quelconque des revendications 4 à 7, **caractérisé en ce que** la pompe à huile (3) entraînée électriquement est conçue de telle manière qu'elle puisse fournir seule un courant d'huile suffisant pour l'alimentation d'un dispositif de commande hydraulique de la boîte de vitesses automatique et/ou de l'élément de démarrage et/ou pour le refroidissement de l'élément de démarrage.

9. Procédé selon l'une quelconque des revendications 4 à 8, **caractérisé en ce que** la pompe à huile (2) entraînée mécaniquement et/ou la pompe à huile (3) entraînée électriquement coopèrent avec un moyen de conversion (20), **en ce qu'**une quantité d'huile transportée accrue avec une pression de transport réduite est produite à partir d'une quantité d'huile à pression de transport donnée transportée par au moins une de ces pompes à huile (2, 3), et cette quantité d'huile est utilisée pour le refroidissement de l'élément de démarrage.

10. Procédé selon la revendication 9, **caractérisé en ce que** l'on utilise une tuyère de Venturi comme moyen de conversion (20).

11. Procédé selon l'une quelconque des revendications 4 à 10, **caractérisé en ce que** la pompe à huile (2) entraînée électriquement est alimentée avec un courant électrique fourni par une batterie et/ou un condensateur lorsque le moteur de propulsion (4) est arrêté.

12. Procédé selon l'une quelconque des revendications 4 à 11, **caractérisé en ce que** l'on utilise un dispositif pour évaluer la quantité d'énergie électrique disponible pour le fonctionnement de la pompe à huile (3) entraînée électriquement, qui émet un premier signal de dépassement vers le bas en cas de dépassement vers le bas d'une première valeur limite de la quantité d'énergie électrique disponible.

13. Procédé selon la revendication 12, **caractérisé en ce que** l'on empêche la phase de démarrage en présence du premier signal de dépassement vers le bas, jusqu'à ce que le condensateur soit chargé au moins largement à un niveau complet.

14. Procédé selon l'une quelconque des revendications 12 ou 13, **caractérisé en ce que** le dispositif pour évaluer la quantité d'énergie électrique disponible pour le fonctionnement de la pompe à huile (3) entraînée électriquement émet un deuxième signal de dépassement vers le bas en cas de dépassement vers le bas d'une deuxième valeur limite de la quantité d'énergie électrique disponible, qui est inférieure à la première valeur limite.

15. Procédé selon la revendication 14, **caractérisé en ce que**, en présence du deuxième signal de dépassement vers le bas, la pompe à huile (3) entraînée électriquement ne fonctionne pas, **en ce que** le courant d'huile pour le refroidissement de l'élément de démarrage nécessaire pour le fonctionnement de démarrage est appliqué uniquement par la pompe à huile (2) entraînée mécaniquement par le moteur de propulsion (4), et **en ce que** le dispositif de commande hydraulique de la boîte de vitesses automatique et/ou de l'élément de démarrage configure la phase de démarrage de façon à produire une quantité de chaleur aussi faible que possible dans l'élément de démarrage.

16. Procédé selon l'une quelconque des revendications 4 à 15, **caractérisé en ce que** l'on utilise un élément de détermination de la demande de quantité d'huile, qui détecte la demande de quantité d'huile actuelle et/ou immédiatement imminente pour le dispositif de commande hydraulique de la boîte de vitesses automatique et/ou de l'élément de démarrage, qui détermine la puissance de pompage d'huile actuelle et/ou immédiatement imminente par la pompe à huile (2) entraînée mécaniquement par le moteur de propulsion (4) et on détermine une demande complémentaire de quantité d'huile à partir de la demande de quantité d'huile et de la puissance de pompage d'huile de la pompe à huile (2) entraînée mécaniquement par le moteur de propulsion (4).

17. Procédé selon la revendication 16, **caractérisé en ce que** l'on tient compte de la température de l'huile lors de la détermination de la demande de quantité d'huile et/ou de la puissance de pompage d'huile et/ou de la demande complémentaire de quantité d'huile.

18. Procédé selon l'une quelconque des revendications 16 ou 17, **caractérisé en ce que** l'on commande la pompe à huile (3) entraînée électriquement de telle manière que sa puissance de refoulement corresponde au moins à la demande complémentaire de quantité d'huile.

19. Procédé selon l'une quelconque des revendications 4 à 18, **caractérisé en ce que** l'on utilise un entraînement constitué par un entraînement hybride.

20. Procédé selon l'une quelconque des revendications 4 à 19, **caractérisé en ce qu'**un véhicule automobile fonctionnant selon l'une quelconque des revendications précédentes est équipé d'une fonctionnalité Start-Stop.

21. Procédé selon l'une quelconque des revendications 4 à 20, **caractérisé par** un premier mode de fonctionnement, dans lequel
- la pompe à huile (2) pouvant être entraînée mécaniquement est à l'arrêt et la pompe à huile (3) pouvant être entraînée électriquement est en fonctionnement,
- la soupape d'inversion (13) est actionnée de telle manière que l'alimentation en huile de lubrification (10) de la boîte de vitesses et l'alimentation en huile de refroidissement de l'élément de démarrage (11) est interrompue au moins pour la plus grande partie par la pompe à huile (3) entraînée électriquement,
- il ne peut pas s'écouler d'huile dans un réservoir d'huile commun (1) à travers la pompe à huile (2) pouvant être entraînée mécaniquement,
- la pompe à huile (3) entraînée électriquement produit une telle pression d'huile et celle-ci est transmise au régulateur de pression (8) pour les éléments de changement de vitesse de la boîte de vitesses automatique que ces éléments de changement de vitesse puissent ainsi rester préremplis ou être préremplis.

22. Procédé selon l'une quelconque des revendications 4 à 21, **caractérisé par** un deuxième mode de fonctionnement, dans lequel
- la pompe à huile (2) pouvant être entraînée mécaniquement et la pompe à huile (3) pouvant être entraînée électriquement sont en fonctionnement,
- la soupape d'inversion (13) pour l'alimentation en huile de refroidissement de l'élément de démarrage (11) est essentiellement ouverte,
- la soupape haute pression (2) est réglée de telle manière qu'il apparaisse au régulateur de pression (8) une pression de commutation suffisamment haute pour commuter les éléments de changement de vitesse de la boîte de vitesses,
- un courant d'huile est conduit vers la soupape d'inversion (13) à travers la soupape haute pression (2) avec une pression qui est inférieure à la pression conduisant au régulateur de pression (8), et
- la pompe à huile (3) entraînée électriquement transporte au moins encore le courant d'huile qui, en plus du courant d'huile fourni par la pompe à huile (2) entraînée mécaniquement, est nécessaire pour le refroidissement de l'élément de démarrage (11).

23. Procédé selon l'une quelconque des revendications 4 à 22, **caractérisé par** un troisième mode de fonctionnement, dans lequel
- la pompe à huile (2) pouvant être entraînée mécaniquement est en fonctionnement et la pompe huile (3) pouvant être entraînée électriquement est à l'arrêt,
- la soupape d'inversion (13) est ouverte pour l'alimentation en huile de lubrification (10) de la boîte de vitesses et est essentiellement fermée pour l'alimentation en huile de refroidissement de l'élément de démarrage (11),
- la soupape haute pression (2) est réglée de telle manière qu'il apparaisse au régulateur de pression (8) une pression de commutation suffisamment haute pour commuter les éléments de changement de vitesse de la boîte de vitesses,
- un courant d'huile est conduit vers la soupape d'inversion (13) à travers la soupape haute pression (2) avec une pression qui est inférieure à la pression conduisant au régulateur de pression (8), et
- un clapet anti-retour (7) situé en amont avant la pompe à huile (3) pouvant être entraînée électriquement est fermé par la pression du courant d'huile amené par la soupape haute pression (6), de telle manière qu'il ne puisse pas se produire d'échappement d'huile par la pompe à huile (3) pouvant être entraînée électriquement qui est arrêtée.
